# EUROPEAN PATENT APPLICATION

(11) **EP 3 068 159 A1**
(43) Date of publication of application: **14.09.2016**
(21) Application number: 13899252.4
(22) Date of filing: 10.12.2013
(51) Int. Cl.: H04W 24/08

(54) **CELL MANAGEMENT DEVICE AND CELL MANAGEMENT METHOD**

(71) Applicant: Huawei Technologies Co., Ltd., Longgang District Shenzhen, Guangdong 518129 (CN)
(72) Inventor: ZHANG, Si, Shenzhen Guangdong 518129 (CN); WANG, Jueping, Shenzhen Guangdong 518129 (CN); HE, Yong, Shenzhen Guangdong 518129 (CN)
(74) Representative: Gill Jennings & Every LLP
(86) International application number: PCT/CN2013/089016
(87) International publication number: WO 2015/085496

(57) **Abstract**

Embodiments of the present invention provide a cell management device and method. A data transmission delay between a coordinating cell and a serving cell is measured and compared with a requirement of a preset coordination manner for the data transmission delay, coordinating cells are managed by category according to the delay, a coordinating cell that satisfies the requirement of the preset coordination manner for the data transmission delay is identified, and then the coordinating cell that satisfies the delay requirement participates in coordinated communication of the cell with priority. Therefore, normal implementation of a coordinated function can be ensured, and an expected effect of the coordinated communication of the cell can be exerted. The device may be applicable to multiple networking cases and can be set flexibly, easily and conveniently.

## Description

### TECHNICAL FIELD

Embodiments of the present invention relate to the field of communications technologies, and in particular, to a cell management device and a cell management method.

### BACKGROUND

As an important transmission technology in the development of a mobile communications system, coordinated multiple points (CoMP, coordinated multiple points), multiple nodes of different geographic locations are used to perform coordinated processing, to resolve a problem of a restriction of single-cell single-site transmission in an existing cellular system on a frequency resource of the system. A signal may be sent and received in multiple coordination manners, such as coordination of multiple sites with a remote radio frequency unit, coordination of a site with a repeater station to which the site belongs, or coordination among multiple sites. Then an uplink and a downlink may be established between a user equipment (UE, user equipment) and radio frequency units of multiple sites to perform communication, thereby effectively expanding a signal coverage range, implementing effective utilization of a spectrum resource, improving an average throughput of the system, optimizing overall performance of the coordinated system, and in particular, improving a data transmission rate for a cell edge user.

A serving cell and a coordinating cell of the user equipment are defined in the CoMP technology, where the serving cell and the coordinating cell jointly participate in coordinated data transmission. In the prior art, the coordinating cell is generally selected by a person skilled in the art manually according to a site deployment situation and an objective of network optimization, and an effect of coordinated communication is not satisfactory when the selected coordinating cell actually performs coordinated data transmission.

### SUMMARY

Embodiments of the present invention provide a cell management device and method, which can improve coordinated communication performance of a cell.

According to a first aspect, a cell management device is provided in an embodiment of the present invention, where the cell management device includes:
a delay measurement unit, configured to measure a data transmission delay between a primary site and a candidate secondary site that interworks with the primary site;
a delay storage unit, configured to store the data transmission delay obtained by the delay measurement unit by means of measurement; and
a delay management unit, configured to determine, according to the data transmission delay, one or more cells that are of the candidate secondary site and satisfy a delay requirement of a preset cell coordination manner, and select a coordinating cell from the one or more cells that satisfy the delay requirement of the preset cell coordination manner.

In a first possible implementation manner of the first aspect, that a delay measurement unit is configured to measure a data transmission delay between a primary site and a candidate secondary site that interworks with the primary site includes: configured to measure a round-trip delay required when a measurement message sent by the primary site is transmitted to the candidate secondary site, and is then returned to the primary site from the candidate secondary site.

With reference to the first aspect or the first possible implementation manner of the first aspect, in a second possible implementation manner of the first aspect, a measurement message transceiver subunit is configured to send the measurement message to the candidate secondary site, and send a first instruction message to a timing subunit to instruct the timing subunit to start timing; and is configured to receive the measurement message returned by the candidate secondary site, and send a second instruction message to the timing subunit to instruct the timing subunit to stop timing.

The timing subunit is configured to start timing after receiving the first instruction message and stop timing after receiving the second instruction message, and send the data transmission delay obtained by recording to the data transmission delay storage unit.

With reference to the second possible implementation manner of the first aspect, in a third possible implementation manner of the first aspect, the timing subunit is further configured to: if there are at least two selected coordinating cells, measure a relative delay of data transmission of the at least two selected coordinating cells; and
the cell management device further includes a delay adjustment unit, which is configured to adjust and align the relative delay of data transmission of the coordinating cells.

With reference to the third possible implementation manner of the first aspect, in a fourth possible implementation manner of the first aspect, the delay adjustment unit further includes:
a comparing subunit, configured to compare delays for sending, by coordinating cells, data to a serving cell, so as to obtain a maximum relative delay;
a caching time calculating subunit, configured to calculate, based on the maximum relative delay, caching time for data sent by another coordinating cell, where the another coordinating cell refers to a cell except a coordinating cell corresponding to the maximum relative delay, and the caching time is caching time for data sent by the another coordinating cell relative to the coordinating cell corresponding to the maximum relative delay; and
a data caching subunit, configured to temporarily store, according to information about the caching time of the data, the data sent by the another coordinating cell.

According to a second aspect, a cell management method is provided in an embodiment of the present invention, including:
measuring a data transmission delay between a primary site and a candidate secondary site that interworks with the primary site;
storing the data transmission delay obtained by means of measurement;
determining, according to the data transmission delay, one or more cells that are of the candidate secondary site and satisfy a delay requirement of a preset cell coordination manner; and
selecting a coordinating cell from the one or more cells that satisfy the delay requirement of the preset cell coordination manner.

In a first possible implementation manner of the second aspect, the data transmission delay is a round-trip delay required when a measurement message sent by the primary site is transmitted to the candidate secondary site, and is then returned to the primary site from the candidate secondary site.

With reference to the first possible implementation manner of the second aspect, in a second possible implementation manner of the second aspect, the measuring a data transmission delay between a primary site and a candidate secondary site includes:
sending the measurement message to the candidate secondary site, and receiving the measurement message returned by the candidate secondary site; starting timing after the measurement message is sent, and stopping timing after the measurement message returned by the candidate secondary site is received, and recording the obtained data transmission delay.

With reference to the second possible implementation manner of the second aspect, in a third possible implementation manner of the second aspect, after the selecting a coordinating cell from the one or more cells that satisfy the delay requirement of the preset cell coordination manner, the method further includes:
if there are at least two selected coordinating cells, measuring a relative delay of data transmission of the at least two selected coordinating cells; and
adjusting and aligning the relative delay.

With reference to the third possible implementation manner of the second aspect, in a fourth possible implementation manner of the second aspect, the adjusting and aligning the relative delay includes:
comparing delays for sending, by coordinating cells, data to a serving cell, so as to obtain a maximum relative delay;
calculating, based on the maximum relative delay, caching time for data sent by another coordinating cell, where the another coordinating cell refers to a cell except a coordinating cell corresponding to the maximum relative delay, and the caching time is caching time for data sent by the another coordinating cell relative to the coordinating cell corresponding to the maximum relative delay; and
temporarily storing, according to information about the caching time of the data, the data sent by the another coordinating cell.

By using the cell management device and the cell management method provided in the embodiments of the present invention, a data transmission delay between a coordinating cell and a serving cell is measured and compared with a requirement of a preset coordination manner for the data transmission delay, a coordinating cell that satisfies the delay requirement is identified, and then the coordinating cell that satisfies the delay requirement participates in coordinated communication of the cell with priority. Therefore, normal implementation of a coordinated data transmission function can be ensured, and an effect of coordinated multiple-point communication can be improved. The cell management device may be applicable to multiple networking scenarios and can be set flexibly, easily and conveniently. Further, in the embodiments of the present invention, by using a measurement sequence that is established by referring to actual data, the data transmission delay between the coordinating cell and the serving cell can be accurately measured, and therefore a measurement error is reduced.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a schematic diagram of a cell management device according to an embodiment of the present invention;
FIG. 3 shows a manner of using a cell management device according to an embodiment of the present invention;
FIG. 4 shows a manner of using a cell management device according to an embodiment of the present invention;
FIG. 5 shows a manner of using a cell management device according to an embodiment of the present invention;
FIG. 6 shows a manner of using a cell management device according to an embodiment of the present invention;
FIG. 7 is a schematic diagram of another cell management device according to an embodiment of the present invention;
FIG. 8 is a schematic diagram of still another cell management device according to an embodiment of the present invention;
FIG. 9 is a schematic diagram of yet another cell management device according to an embodiment of the present invention; and
FIG. 10 is a flowchart of a cell management method according to the present invention.

### DESCRIPTION OF EMBODIMENTS

To make the objectives, technical solutions, and advantages of the present invention clearer, the following further describes the embodiments of the present invention in detail with reference to the accompanying drawings.

Technologies described in this specification may be applied to various communications systems, for example, current 3G communications systems and a next-generation communications system, for example, a Code Division Multiple Access (CDMA, code division multiple access) system, a Time Division Multiple Access (TDMA, time division multiple access) system, a Wideband Code Division Multiple Access (WCDMA, wideband code division multiple access) system, a Long Term Evolution (LTE, Long Term Evolution) system, and future evolved systems.

In the embodiments of the present invention, a site may be configured to manage at least one cell of the site, select a coordinating cell for a user equipment (UE, user equipment) in the cell, and exchange information with another neighboring site. In different wireless communications systems, the site may include different components, for example, in the CDMA system, the site may include a base station controller (BSC, base station controller); in the WCDMA system, the site may include a radio network controller (RNC, radio network controller); and in the LTE system as well as the future evolved systems, the site may be an evolved NodeB (e-Node B, evolved Node B).

A manner of coordinated multiple-point transmission may be classified into two types: inter-site coordination and intra-site coordination. The intra-site coordination means that coordinating cells are within a same site; and the inter-site coordination means that coordinating cell are separately controlled by different sites. In the inter-site coordination manner, a large quantity of related data information of the user equipment in the cell is required to be shared between different sites; therefore, a requirement for an inter-site data transmission delay of the coordinating cells is relatively high. If the data transmission delay is beyond an acceptable range, a result that an expected effect of coordinated multiple-point transmission cannot be achieved is caused. It should be noted that the embodiments of the present invention are mainly for the inter-site coordinated multiple-point transmission manner.

A cell management device provided in the embodiments of the present invention may be a base station, or may be a component of the base station, for example, may be a baseband processing unit in the base station, or another device that is independent of the baseband processing unit but connected to the baseband processing unit within the base station. Alternatively, the cell management device may also be a centralized management device, for example, a central node, or a component of the centralized management device, where the centralized management device may be connected to at least one base station that has a transmitting and receiving function.

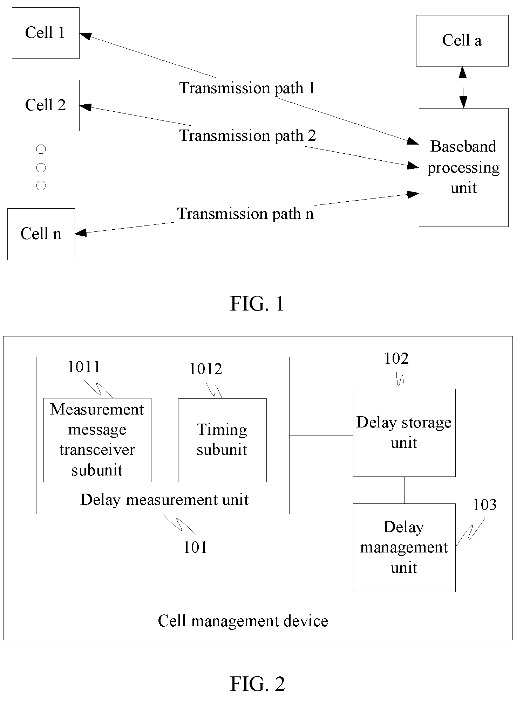

FIG. 1 is an application scenario of an embodiment of the present invention. In the application scenario, it is assumed that a cell a is a serving cell, a cell 1, a cell 2, ..., a cell n are coordinating cells that coordinate with the cell a to process data transmission in the cell a, and a baseband processing unit (BBU, Base Band Unit) of a site to which the cell a belongs completes deployment of a coordinated function. Data of the coordinating cells shown in FIG. 1 reaches the baseband processing unit of a site of the serving cell through different transmission paths, such as a transmission path 1, a transmission path 2, ..., transmission path n shown in FIG. 1, and delays for each coordinating cell to reach the baseband processing unit are different due to a difference in transmission paths. Different types of coordinated functions have different requirements for the data transmission delay from the coordinating cells to the serving cell. If a coordinating cell that does not satisfy the delay requirement is used to implement the coordinated function, a decrease in benefit of the coordinated function is caused.

It should be noted that FIG. 1 is merely a schematic diagram of deployment of a coordinated function. Distribution, locations, and quantities of the coordinating cells and the serving cell, and directions and distances of the data transmission paths shown in FIG. 1 are merely exemplary, and may be determined according to a networking requirement of a network in an actual situation, which is not limited in this embodiment of the present invention.

An embodiment of the present invention provides a cell management device, as shown in FIG. 2.

The cell management device may include a delay measurement unit 101, which is configured to measure a data transmission delay between a primary site and a candidate secondary site that interworks with the primary site.

The primary site refers to a site in which a serving cell is located, and the candidate secondary site refers to a site in which a candidate coordinating cell is located. The candidate secondary site and the primary site are interworking sites, and the interworking sites refer to sites that have a neighboring relationship and may perform data interaction. The primary site and the candidate secondary site may be mutually interworking sites. An interworking relationship between the interworking sites may be determined according to a designed network topology view when a network is planned, or may be adjusted according to an actual requirement after initial deployment. Information about the interworking sites may be stored in a network management device or each site. Each interworking site may acquire information about another interworking site, and a manner of acquiring the information is not limited. A site may send a request message to a network management device, and the network management device delivers the information to the site, or, for example, a request may be directly sent to interworking sites having a interworking relationship to obtain information about the interworking site, or the information about the interworking site is directly sent to sites having an interworking relationship. Each interworking site manages at least one cell, and cells of different interworking sites may perform inter-site coordinated communication.

Optionally, the delay measurement unit 101 may measure a round-trip delay required when the primary site performs data interaction with the candidate secondary site, that is, measuring total time required for data to be sent from the primary site to the candidate secondary site through a data transmission path between the candidate secondary site and the primary site and then returned to the primary site through the data transmission path.

A delay storage unit 102 is configured to store the data transmission delay obtained by the delay measurement unit 101 by means of measurement.

Optionally, the delay storage unit 102 stores a data transmission delay that is between each site and another interworking site and measured by the delay measurement unit 101. For example, the data transmission delay may be stored in a form of a table to facilitate extraction and management.

It should be noted that, in this embodiment of the present invention, if multiple cells of a same site are distributed in a centralized manner, a data transmission delay from each cell of the same site to a site to which the cell belongs may be ignored, that is, a delay difference between cells is not taken into account. Therefore, the data transmission delay between the interworking sites that is stored in the delay storage unit 102 is a data transmission delay between cells of each interworking site. Descriptions, which are presented in the embodiments of the present invention, of the data transmission delay between interworking sites and of the data transmission delay between cells of each interworking site have consistent meanings, and will not be explained repeatedly in the following description.

In another embodiment, if multiple cells of a same site are distributed in a dispersed manner, a data transmission delay from each cell of the same site to the site to which the cell belongs may be further measured beside a data transmission delay between sites is measured. The data transmission delay that is stored by the delay storage unit 102 is a sum of two types of delays, and implementation performance of the coordinated function may be improved. A case in which the cells of a same site are distributed in a centralized manner is described in this embodiment of the present invention. For a case in which the cells of a same site are distributed in a dispersed manner, reference may be made to descriptions in this embodiment of the present invention.

A delay management unit 103 is configured to determine, according to the data transmission delay, one or more cells of the candidate secondary site and satisfy a delay requirement of a preset cell coordination manner, and select a coordinating cell from the one or more cells that satisfy the delay requirement of the preset cell coordination manner. The coordinating cell is configured to perform coordinated multiple-point data transmission according to the preset cell coordination manner.

Because the coordinating cell and the serving cell relatively exist, a data transmission delay between any two interworking sites needs to be measured, so as to facilitate managing different cells by category according to the data transmission delay, and constructing a corresponding candidate coordinating cell set according to a requirement of different coordination manners.

The cell coordination manner may be preset, for example, the primary site may deploy an uplink coordination manner or a downlink coordination manner in advance, or deploy the foregoing two coordination manners at the same time.

The uplink coordination manner means that a base station of the serving cell and a base station of the coordinating cell jointly receive a signal sent by a user equipment to perform joint reception of the signal; the downlink coordination manner means that a base station of the serving cell and a base station of the coordinating cell jointly transmit same or different data to a user equipment, so that a user may obtain a gain of signal combination. Different coordination manners have different requirements for a performance indicator of data transmission, and also have a corresponding provision for a data transmission delay.

Therefore, the delay management unit 103 may be configured to compare the stored inter-site data transmission delay with the delay requirement of the preset coordination manner, and manage, by category, the cells of each interworking site according to the data transmission delay, to establish a candidate coordinating cell set.

Optionally, the delay management unit 103 may search for the data transmission delay stored in the delay storage unit 102 and classify, according to the delay requirement of the preset cell coordination manner, the cells that are of the candidate secondary site and satisfy the delay requirement into a same cell set, where the cells of the site is marked as cells that participate in coordination with priority; further, cells that do not satisfy the delay requirement may also be marked as cells that are not recommended to participate in the coordination. A marking manner is not limited, where a field may be added or a flag bit may be added to cell information data. Information about the cell set may be stored in the delay management unit 103 in a form of a table.

The delay management unit 103 may be further configured to select, according to a requirement for another performance indicator except the delay requirement of the preset cell coordination manner, the coordinating cell from a candidate cell set that is managed by category according to the data transmission delay. The another performance indicator includes indicators in the prior art such as a neighboring relationship between cells, a physical location, and transmit power of a user equipment in a neighboring cell, which is not described herein again.

By using the cell management device provided in this embodiment of the present invention, a data transmission delay between a coordinating cell and a serving cell is measured and compared with a requirement of a preset coordinating cell manner for the data transmission delay, a coordinating cell that satisfies the delay requirement is identified, and then the coordinating cell that satisfies the delay requirement participates in coordinated communication of the cell with priority. Therefore, normal implementation of a coordinated data transmission function can be ensured, and an effect of coordinated communication of the cell can be improved.

Optionally, in another embodiment of the present invention, the delay measurement unit 101 may further include: a measurement message transceiver subunit 1011, configured to send a measurement message to the candidate secondary site and send a first instruction message to a timing subunit 1012 to instruct the timing subunit 1012 to start timing; and configured to receive the measurement message returned by the candidate secondary site and send a second instruction message to the timing subunit 1012 to instruct the timing subunit 1012 to stop timing; and
the timing subunit 1012, configured to start timing after receiving the first instruction message and stop timing after receiving the second instruction message, and send the data transmission delay obtained by recording to the delay storage unit 102.

Optionally, in another embodiment of the present invention, the measurement message may be a measurement sequence. The delay measurement unit 101 includes two functions, that is, storing a sequence source, and sending and receiving the measurement sequence. The sequence source includes the measurement sequence that is used to measure the data transmission delay and may be automatically updated when the measurement sequence needs to be changed. A length of the measurement sequence is designed according to an actual length of transmitted data, and if the measurement sequence is too long, for example, longer than actual service data, time for processing the sequence after being received by the site increases, and correspondingly, a return delay also increases; similarly, if the measurement sequence is too short, a measured delay is too short, which does not comply with an actual condition of data transmission. In addition, content of the measurement sequence should facilitate identification and error correction of transmitted data. In a specific implementation, content and a length of a sequence may be determined according to an actual situation, which is not particularly limited in this embodiment of the present invention. For example, a measurement sequence shown below may be used and a length of the measurement sequence is 1024 bits.
1 0 1 0......1 0 1 0 1 0 (unit: bit, length: 1024)

A data transmission delay between a coordinating cell and a serving cell may be accurately measured by using a measurement sequence, which is established according to actual data, as a measurement message, so as to reduce a measurement error.

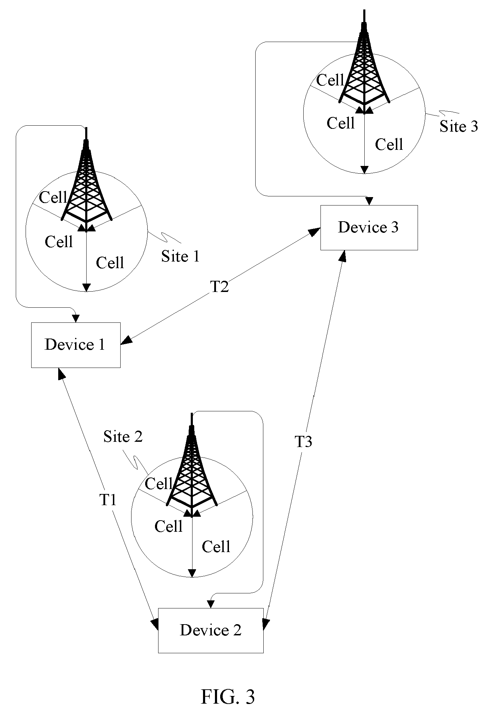

The cell management device provided in this embodiment of the present invention may be applicable to multiple networking cases. In different network topologies, content of a data transmission delay that needs to be measured is different, and complexity of measurement also varies. In a schematic networking diagram shown in FIG. 3, each of a site 1, a site 2, and a site 3 cover 3 cells, and one cell management device provided in this embodiment of the present invention is configured in each site, which are a device 1, a device 2, and a device 3 separately, where the site 1, the site 2, and the site 3 are mutually interworking sites; each site may separately measure a data transmission delay from the site to another interworking site. As shown in FIG. 3, the site 1 separately measures a delay T1 from the site 1 to the site 2 and a delay T2 from the site 1 to the site 3; the site 2 separately measures the delay T1 from the site 2 to the site 1 and a delay T3 from the site 2 to the site 3. The site 3 needs to measure the delay T2 from the site 3 to the site 1 and the delay T3 from the site 3 to the site 2. Data transmission delays of all the interworking sites are measured to facilitate management, by category, of cells of each interworking site, so that no omission occurs when a site of a serving cell selects a coordinating cell to participate in coordinated communication.

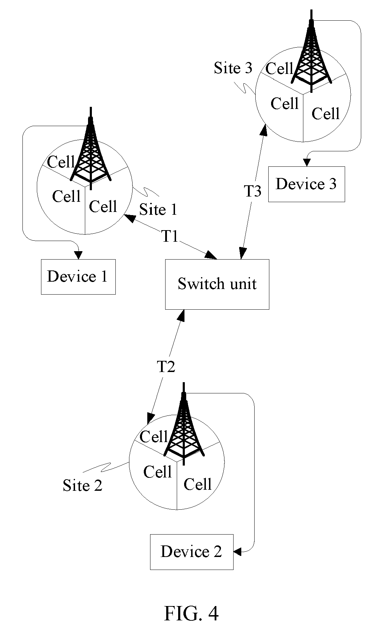

In another embodiment of the present invention, as shown in FIG. 4, a site 1, a site 2, and a site 3 transmit data by using a switching unit, and a cell management device provided in this embodiment of the present invention is configured in the site 1, the site 2 and the site 3 each. For example, a cell of the site 1 is used as a serving cell, and the site 1 needs to measure a delay T1 from the site 1 to the switching unit and a delay T2 from the site 2 to the switching unit. A delay between the site 1 and the site 2 is T1+T2, where T1 is measured by the site 1, T2 is measured by the site 2, and the site 1 is notified of measurement information by the switching unit, and the site 1 calculates the delay. Similarly, a delay between the site 1 and the site 3 is T1+T3, and a delay between the site 2 and the site 3 is T2+T3.

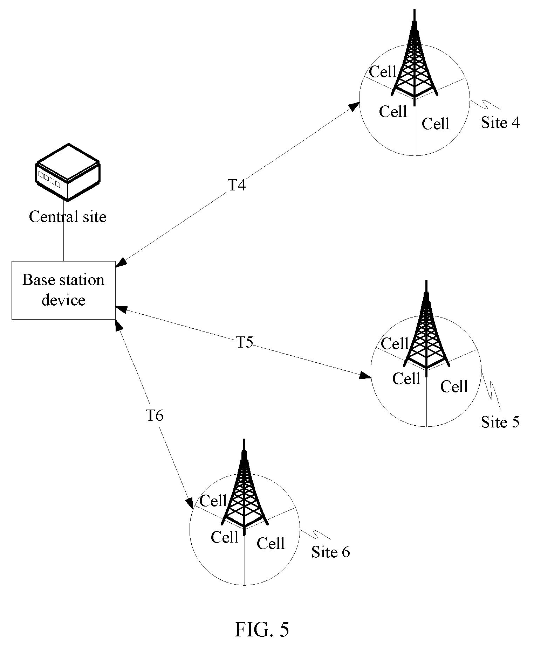

Further, in another embodiment of the present invention, interworking sites only have a data transmitting and receiving function, and are managed and controlled in a centralized manner by a central site. The central site has a function of managing connected interworking sites. The cell management device provided in this embodiment of the present invention is configured in the central site. Because a coordinated data transmission function is completed by the central site, data of a coordinating cell needs to be transmitted to the central site for coordinated processing after the central site determines the coordinating cell for the cell that is of an interworking site managed by the central site; therefore, a data transmission delay from each interworking site to the central site is equivalent to a data transmission delay from each interworking site to another interworking site. In a schematic networking diagram shown in FIG. 5, a site 4 to a site 6 merely have a function of transmitting and receiving data, and a central site is separately connected to the site 4 to the site 6 by using communications links to implement data transmission between the central site and each site and data forwarding among the site 4 to the site 6. The central site may measure a data transmission delay from the central site to each connected interworking site, which includes delays T4, T5, and T6 from the central site to the site 4, from the central site the site 5, and from the central site the site 6 shown in FIG. 5. The site 4 is used as an example, where a delay from the site 4 to the site 5 is T4+T5, and a delay from the site 4 to the site 6 is T4+T6. It should be noted that, although the site 4 to the site 6 are connected by using a switching unit, a cell management site of the central site may directly measure a delay from each site to the central site and there is no need to measure a delay from each site to the switching unit because the central site is responsible for a function of each site and the switching unit implements a data forwarding function.

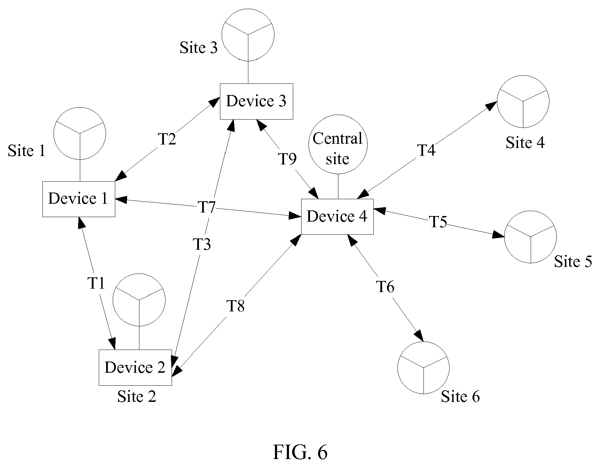

Further, the cell management device may be further applicable to a hybrid networking scenario that converges a networking manner shown FIG. 3 and a networking manner shown in FIG. 5. Specifically, as shown in FIG. 6, a device 1, a device 2, and a device 3 are respectively configured in a site 1, a site 2 and a site 3, and a device 4 is configured in a central site. In the hybrid networking scenario, in addition to measuring two types of data transmission delays shown in the embodiments of FIG. 3 and FIG. 5, a data transmission delay between the site in which the cell management device of this embodiment of the present invention is configured and the central site needs to be measured. For example, a cell of the site 1 is used as a serving cell, and a data transmission delay measured by the site 1 from the site 1 to the central site is T7; it may be obtained that a delay from the site 1 to the site 4 is T7+T4, a delay from the site 1 to the site 5 is T7+T5, and a delay from the site 1 to the site 6 is T7+T6. For example, a cell of the site 4 is used as a serving cell, and a data transmission delay measured by the site 4 from the site 4 to the central site is T4; it may be obtained that a delay from the site 4 to the site 1 is T7+T4, a delay from the site 4 to the site 2 is T4+T8, and a delay from the site 4 to the site 3 is T4+T9. A manner of measuring a delay between interworking sites is the same as what is described above, and details are not described herein again.

It should be noted that, various application scenarios provided in FIG. 3 to FIG. 6 of the embodiments of the present invention are merely examples. In a specific scenario, a quantity of various type of sites, an interworking relationship between the sites, and the like, are not limited thereto.

The application scenario shown in FIG. 6 is used as an example. After data delay measurement is completed, a data transmission delay obtained by means of measurement is stored by a delay storage unit 102 of a cell management device of a site in which a serving cell is located. For example, storage content of the data transmission delays between the site 1 and other interworking sites is shown in Table 1. For a site whose function of coordinated data transmission is centralized on the central site, the data transmission delay may be stored in the cell management device of the central site. For example, a storage method of data transmission delays between the site 4 and other interworking sites is shown in Table 2 below. Because a function of coordinated data transmission of the site 4 is centralized on the central site, the data transmission delays of the site 4 are stored in the cell management device of the central site.

**Table 1 Table for storing data transmission delays between a site 1 and other interworking sites**

| **Interworking site** | **Inter-cell data transmission delay** |
|---|---|
| Site 2 | T1 |
| Site 3 | T2 |
| Site 4 | T7+T4 |
| Site 5 | T7+T5 |
| Site 6 | T7+T6 |

**Table 2 Table for storing data transmission delays between a site 4 and other sites**

| **Interworking site** | **Inter-cell data transmission delay** |
|---|---|
| Site 1 | T4+T7 |
| Site 2 | T4+T8 |
| Site 3 | T4+T9 |
| Site 5 | T4+T5 |
| Site 6 | T4+T6 |

Further, the application scenario shown in FIG. 6 is still used as an example to describe an operating manner of a delay management unit 103.

It is assumed that a cell of the site 1 is a serving cell, and the cell needs to receive data from another coordinating cell to complete a function of inter-site coordinated data transmission in a preset coordination manner. Then, when a coordinating cell set is to be established, a data transmission delay between this cell and a cell of another interworking site needs to be considered, so that the coordinated function can be normally implemented. Therefore, the delay management unit 103 is configured to establish the cell set according to delay requirements of different coordination manners and an actual data transmission delay between interworking sites that is obtained by means of measurement.

It is assumed that the site 1 deploys three coordination manners for a cell a in advance, and three different coordinated data transmission functions ("coordinated function" for short) may be implemented. A requirement of a coordinated function 1 for a delay between a serving cell and a coordinating cell is less than Td1 (it is assumed that Td1=100us), a requirement of a coordinated function 2 for the delay is less than Td2 (it is assumed that Td2=1ms), and a requirement of a coordinated function 3 for the delay is assumed to be less than Td3 (it is assumed that Td3=4ms). It is assumed that actually measured data transmission delays between the site 1 and other interworking sites are shown in Table 3.

**Table 3 Example of measurement results of delays between a cell of a site 1 and other interworking sites**

| **Interworking site** | **Inter-cell data transmission delay** |
|---|---|
| Site 2 | T1=80us |
| Site 3 | T2=3ms |
| Site 4 | T7+T4 =6ms |
| Site 5 | T7+T5=150us |
| Site 6 | T7+T6= 90us |

It can be seen that, cells whose data transmission delay is less than Td1 include cells of the site 2 and a site 6; cells whose data transmission delay is less than Td2 include cells of the site 2, the site 5 and the site 6, and cells whose data transmission delay is less than Td3 include cells of the site 2, the site 3, the site 5, and the site 6. Different cell sets may be formed according to delay requirements of different coordinated functions, as shown in Table 4. A candidate coordinating cell set is established according to the delays, which serves as a determining condition for selecting a coordinating cell to participate a preset coordination manner.

Values of the foregoing Td1, Td2 and Td3 may be fixed values that are selected in advance according to an experiment or experience, or may be automatically generated and dynamically changed by a site according to an actual operation of the network, which is not particularly limited in this embodiment of the present invention. Similarly, the measurement results in the foregoing embodiment are merely exemplary and shall not constitute any limitation on the present invention.

**Table 4 Condition on establishment of candidate coordinating cell sets of a site 1 in a site distribution topology 1**

| **Coordinated function** | **Candidate coordinating cell set** |
|---|---|
| Coordinated function 1 | Cells of the site 1, a site 2, and a site 6 |
| Coordinated function 2 | Cells of the site 1, the site 2, the site 6, and a site 5 |
| Coordinated function 3 | Cells of the site 1, the site 2, the site 6, the site 5, and a site 3 |

By using the cell management device provided in this embodiment of the present invention, a data transmission delay between a coordinating cell and a serving cell is measured and compared with a requirement of a preset coordinating cell manner for the data transmission delay, a coordinating cell that satisfies the delay requirement is identified, and then the coordinating cell that satisfies the delay requirement participates in coordinated communication of the cell with priority. Therefore, normal implementation of a coordinated data transmission function can be ensured, and an effect of coordinated communication of the cell can be improved. The cell management device may be applicable to multiple networking cases and can be set flexibly, easily and conveniently.

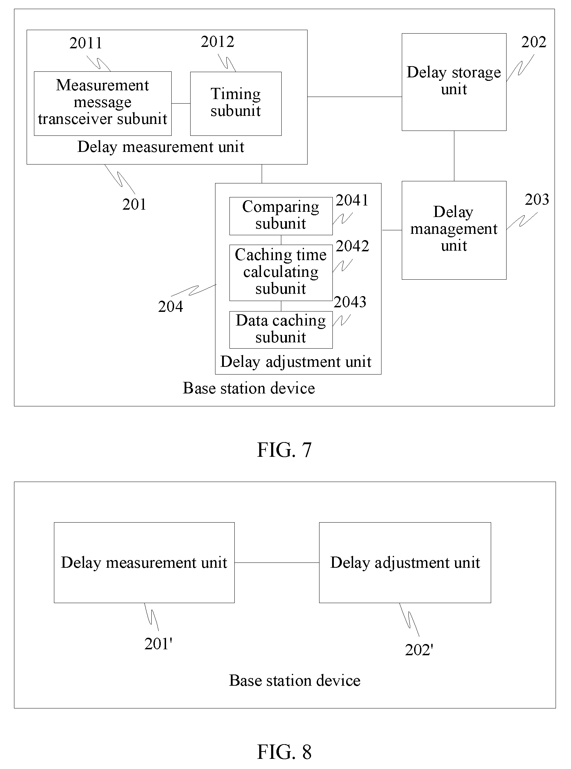

An embodiment of the present invention further provides a cell management device, as shown in FIG. 7.

Functions of the delay storage unit 201 and a delay management unit 202 are the same as those of the delay storage unit 101 and the delay management unit 102 in the embodiment shown in FIG. 2, which are not described herein again.

After a coordinating cell is selected to perform coordinated data transmission according to the foregoing data transmission delay between interworking sites, data transmitted by each coordinating cell may be synchronously adjusted, which includes that data of the coordinating cell that is transmitted relatively earlier to a site of a serving cell is temporarily stored according to a delay difference from a site of each coordinating cell to the site of the serving cell, and after data of the coordinating cell that is transmitted relatively later to the site of the serving cell arrives, two types of data are synchronously transmitted to the site of the serving cell.

In order to implement the foregoing function, the cell management device may further include a delay adjustment unit 204, which is configured to adjust and align a relative delay of data transmission of the coordinating cell after the coordinating cell is selected to participate in coordination and the coordinated function is enabled. Although the relative delay exists because data of coordinating cells reach the serving cell through different transmission paths, it may also be beneficial for real-time data processing, and ensure that data of all the coordinating cells can be sent to the serving cell at the same time to implement synchronous data processing.

Specifically, the timing subunit 2012 is further configured to, if there are at least two coordinating cells, measure a relative delay for sending, by each coordinating cell, data to the serving cell. In this embodiment of the present invention, the so-called delay is a length of time.

For example, a serving cell has N coordinating cells, and the N coordinating cells may be separately identified as a cell 1 to a cell N, where N is an integer and N is greater than 1. When a measurement message transceiver subunit 2011 receives data (for example, may be a measurement message) sent by the cell 1, the timing subunit 2012 starts timing and obtains a relative delay T₁ for sending, by the cell 1, data to the serving cell. By analogy, when data sent by the cell N is received, a delay T_{N-1} for sending, by the cell N, data to the serving cell is obtained. Then N delays may be obtained, including T1, ..., T_{N}, and the N delays are sent to the delay adjustment unit 204, where the delay adjustment unit 204 is configured to adjust and align the relative delays of data transmission of the coordinating cells.

The delay adjustment unit 204 further includes a comparing subunit 2041, which is configured to compare delays, for sending, by the coordinating cells, data to the serving cell, so as to obtain a maximum relative delay.

A caching time calculating subunit 2042 is configured to calculate, based on the maximum relative delay, caching time for data sent by another coordinating cell, and send information about the caching time to a data caching subunit 2043, where the another coordinating cell refers to a cell except a coordinating cell corresponding to the maximum relative delay, and the caching time is caching time for data sent by the another coordinating cell relative to the coordinating cell corresponding to the maximum relative delay.

It is assumed that N=3, that is, the coordinating cells includes a cell 1, a cell 2, and a cell 3, where a relative delay T1 of the cell 1 is greater than a relative delay T2 of the cell 2 as well as a relative delay T3 of the cell 3, T1 is the maximum relative delay, caching time of the cell 2 is T1-T2, and caching time of the cell 3 is T1-T3.

A data caching subunit 2043 is configured to temporarily store, according to information about the caching time of the data, the data sent by the another coordinating cell, and configured to process data of each coordinating cell after the caching time.

By using the cell management device provided in this embodiment of the present invention, after a coordinating cell is selected according to a data transmission delay and coordinated data transmission starts, a relative delay for sending data by the coordinating cell may further be adjusted and aligned to implement synchronous data transmission and processing and improve coordinated communication quality of the cell.

In another embodiment of the present invention, as shown in FIG. 8, the cell management device may merely include a delay measurement unit 201' and a delay adjustment unit 202'. That is, in this embodiment of the present invention, a manner of selecting a coordinating cell is not limited. For a selected coordinating cell, the delay adjustment unit 202' compares, according to relative delays, which are obtained by the delay measurement unit 201' by means of measurement, for sending, by coordinating cells, data to a serving cell, delays for sending, by the coordinating cells, data to the serving cell, so as to obtain a maximum relative delay. Caching time for data sent by another coordinating cell is calculated based on the maximum relative delay, where the another coordinating cell refers to a cell except a coordinating cell corresponding to the maximum relative delay, and the caching time is caching time for data sent by the another coordinating cell relative to the coordinating cell corresponding to the maximum relative delay. Data sent by the another coordinating cell is temporarily stored according to information about the caching time of the data. For a manner for measuring, by the delay measurement unit 201', a relative delay for sending data by a coordinating cell and a manner for adjusting a delay by the delay adjustment unit 202', reference may be made to the timing subunit 2012 and the delay adjustment unit 204. An internal structure and a function of each unit are the same as those in other embodiments described above, which are not described herein again. The cell management device shown in FIG. 8 may be used to adjust and align the relative delay for sending, by the coordinating cells, data, to implement synchronous data transmission and processing in coordinated communication.

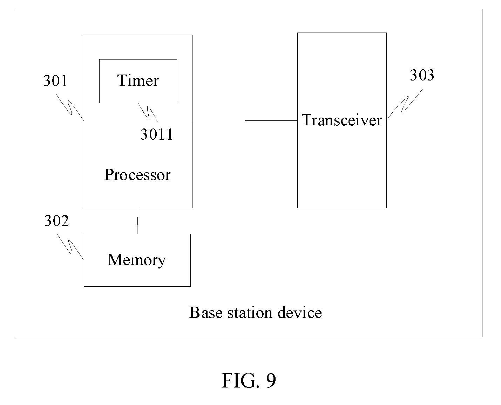

An embodiment of the present invention further provides a cell management device, as shown in FIG. 9.

The cell management device may specifically include a processor 301, which is configured to measure a data transmission delay between a primary site and a candidate secondary site that interworks with the primary site; and configured to determine one or more cells that are of the candidate secondary site and satisfy a delay requirement of a preset cell coordination manner, and select a coordinating cell from the one or more cells that satisfy the delay requirement of the preset cell coordination manner. The coordinating cell is configured to perform coordinated multiple-point data transmission according to the preset cell coordination manner.

A memory 302 is configured to store the data transmission delay obtained by the processor 301 by means of measurement.

Specifically, what is measured by the processor 301 is a round-trip delay of data interaction between the primary site and the candidate secondary site, that is, total time required for data to be sent from the candidate secondary site to the primary site through a transmission path and then returned to the coordinating cell through the original transmission path.

The memory 302 may store the data transmission delay between the primary site and another interworking site, where the data transmission delay is measured by the processor. For example, the data transmission delay may be stored in a form of a table to facilitate extraction and management.

The cell coordination manner may be preset, for example, the primary site may deploy an uplink coordination manner or a downlink coordination manner in advance, or deploy the foregoing two coordination manners at the same time.

Different coordination manners have different requirements for the data transmission delay. The processor 301 may compare the stored data transmission delay with the delay requirement of the preset coordination manner, so as to manage, by category, cells of each interworking site according to the data transmission delay to establish a candidate coordinating cell set.

The processor 301 may be further configured to select, according to a requirement for another performance indicator except the delay requirement of the preset cell coordination manner, the coordinating cell from a candidate coordinating cell set that is managed by category according to the data transmission delay. The another performance indicator includes indicators in the prior art such as a neighboring relationship between cells, a physical location, and transmit power of a user equipment in a neighboring cell, which is not described herein again.

In another embodiment of the present invention, the cell management device may further include a transceiver 303, which is configured to, according to an instruction of the processor 301, send a measurement massage to the candidate secondary site and receive the measurement message returned by the candidate secondary site.

The processor further includes a timer 3011, which is configured to start timing after the measurement message is sent, stop timing after the measurement message returned by the candidate secondary site is received, and record the obtained data transmission delay. The data transmission delay is sent to the memory 302.

Optionally, the measurement message may be a measurement sequence, where the measurement sequence is included in a sequence source, and the sequence source may be stored in the memory 302.

The transceiver 303 is further configured to send the measurement sequence to the candidate secondary site and send a first instruction message to the timer; and configured to receive the measurement message returned by the candidate secondary site and send a second instruction message to the timer 303.

The sequence source includes a data sequence that is used to measure the data transmission delay and may be automatically updated when the measurement sequence needs to be changed. A length of the measurement sequence is designed according to an actual length of transmitted data, and if the measurement sequence is too long, for example, longer than actual service data, time for processing the sequence after being received by the site increases, and correspondingly, a return delay also increases; similarly, if the measurement sequence is too short, a measured delay is too short, which does not comply with an actual condition of data transmission. In addition, content of the measurement sequence should facilitate identification and error correction of transmitted data. In a specific implementation, content and a length of the measurement sequence may be determined according to an actual condition, which is not limited in this embodiment of the present invention.

A data transmission delay between a coordinating cell and a serving cell may be accurately measured by using the measurement sequence, which is established according to actual data, as a measurement message, so as to reduce a measurement error.

In another embodiment of the present invention, the processor 301 may be further configured to adjust and align a relative delay of data transmission of a coordinating cell after the coordinating cell is selected to perform coordinated data transmission according to a data transmission delay between a primary site and a candidate secondary site, to ensure that data of all the coordinating cells can be sent to a serving cell at the same time to implement synchronous data transmission and processing and improve coordinated communication quality of the cell.

Specifically, in this embodiment, the timer 305 is further configured to, if there are at least two coordinating cells, measure a relative delay for sending, by each coordinating cell, data to the serving cell. In this embodiment of the present invention, the so-called delay is a length of time.

For a specific measurement method, reference may be made to relevant descriptions in other embodiments of the present invention, which is not described herein again.

The processor 301 is further configured to: compare delays for sending, by coordinating cells, data to the serving cell, so as to obtain a maximum relative delay; calculate, based on the maximum relative delay, caching time for data sent by another coordinating cell, where the another coordinating cell refers to a cell except a coordinating cell corresponding to the maximum relative delay, and the caching time is caching time for data sent by the another coordinating cell relative to the coordinating cell corresponding to the maximum relative delay; and temporarily store data sent by the another coordinating cell according to information about the caching time of the data; and configured to process data of each coordinating cell after the caching time.

The cell management device provided in this embodiment of the present invention may be applicable to multiple networking cases. In different network topologies, content of the data transmission delay that needs to be measured is different, and complexity of measurement also varies. A technical engineer may deploy a site according to an actual requirement. Networking situations in which the cell management device may be specifically applied are the same as those of the cell management device in embodiments shown in FIG. 3 to FIG. 6, which is not described herein again. For implementation of a function of the cell management device and a specific operating manner of each component within the cell management device, reference may be made to relevant descriptions of the cell management device in the embodiments shown in FIG. 3 to FIG. 6, which are not repeatedly described herein.

Optionally, the foregoing functions of the cell management device may be integrated into a BBU, and may also be integrated into a standalone apparatus within a base station, where the apparatus is connected to the BBU within the base station. The apparatus completes the foregoing functions such as delay measurement, data transmission delay management, and selection of a candidate coordinating cell set. The BBU completes selection of a coordinating cell. A manner of connecting the apparatus to the baseband processing unit is not limited as long as smooth data transmission between the apparatus and the baseband processing unit is ensured and implementation of the functions of the cell management device is not affected.

The apparatus may send information about a candidate coordinating cell set that satisfies a requirement of the data transmission delay to a BBU of a site of the serving cell, and the BBU selects a coordinating cell from the candidate coordinating cell set to participate in the preset cell coordination manner.

The information about the candidate coordinating cell set may include information used to identify a cell, such as a cell identity (Cell ID) of each cell in the set or a geographical coordinate of the serving cell.

The apparatus may also report information about a cell that does not satisfy the requirement of the data transmission delay to the BBU at the same time. When the BBU selects the coordinating cell, the BBU considers the delay requirement of the coordinating cell that participates in the coordinated function, and also comprehensively considers multiple factors such as a neighboring relationship between cells and transmit power of a user equipment within a neighboring cell. Therefore, reporting of the information about the cell that does not satisfy the delay requirement at the same time may provide an alternative scheme for the BBU when selecting the coordinating cell.

According to the cell management device provided in this embodiment of the present invention, a data transmission delay between a coordinating cell and a serving cell is accurately measured, a measurement result is compared with a requirement of a preset coordination manner for the data transmission delay, the coordinating cell that satisfies the delay requirement is identified, and then the coordinating cell that satisfies the delay requirement participates in coordinated communication of the cell with priority. Therefore, normal operation of a coordinated function can be ensured and an effect of coordinated communication of the cell can be improved. Further, after the coordinated communication of the cell starts, the cell management device may be used to adjust and align a relative delay, for sending, by the coordinating cell, data to implement synchronous data transmission and processing and improve coordinated communication quality of the cell. The cell management device may be applicable to multiple networking manners and can be set flexibly, easily and conveniently.

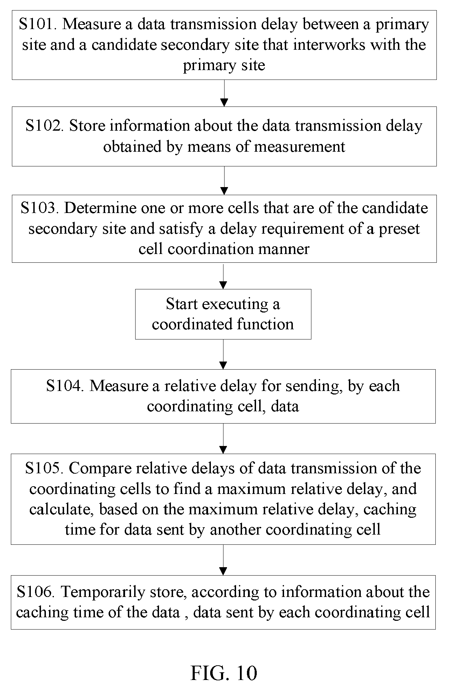

An embodiment of the present invention provides a cell management method, and relates to a cell management device. A process of the method is shown in FIG. 10, including:
S101. Measure a data transmission delay between a primary site and a candidate secondary site that interworks with the primary site.

The primary site and the candidate secondary site are interworking sites.

The data transmission delay is a round-trip delay required when a measurement message is sent by the primary site to the candidate secondary site, and is then returned by the candidate secondary site to the primary site.

Optionally, the measurement message may be sent to the candidate secondary site. Timing starts after the measurement message is sent, and timing stops after the measurement message returned by the candidate secondary site is received.

Optionally, the measurement message may be a measurement sequence that is designed according to an actual length of transmitted data and is included in a sequence source. The sequence source may be automatically updated when the measurement sequence needs to be changed.

S102. Store the data transmission delay obtained by means of measurement.

Specifically, data transmission delays that are between the primary site and candidate secondary sites and are obtained by means of measurement may be stored in a form of a table to facilitate extraction and management.

S103. Determine, according to the data transmission delay, one or more cells that are of the candidate secondary site and satisfy a delay requirement of a preset cell coordination manner by comparing a stored data transmission delay between the primary site and each candidate secondary site with the delay requirement of the preset coordination manner and managing, by category, interworking sites according to the data transmission delay.

Optionally, the primary site may deploy an uplink coordination manner or a downlink coordination manner in advance, or deploy the foregoing two coordination manners at the same time.

Optionally, the step S103 may include: searching for the stored data transmission delay between the primary site and the candidate secondary site; classifying cells that are of the site and satisfy the delay requirement into a same candidate coordinating cell set according to the delay requirement of the preset coordination manner; marking the cells that are of the site and satisfy the delay requirement as cells that participate in coordination with priority; and marking cells that are of the site but do not satisfy the delay requirement as cells that are not recommended to participate in the coordination.

A coordinating cell that participates in a coordinated function has a delay requirement; in addition, multiple factors, such as a neighboring relationship between cells and transmit power of a user equipment within a neighboring cell, also need to be comprehensively considered. Therefore, marking the cells that do not satisfy the delay requirement at the same time may provide an alternative scheme for selecting the coordinating cell.

S1034. Select a coordinating cell from the candidate coordinating cell set that satisfies the requirement of the data transmission delay to participate in the preset cell coordination manner.

Further, optionally, because data transmission paths of coordinating cells are different, a relative delay for data reaching the serving cell exists, which is unfavorable to real-time data processing. Therefore, in another embodiment of the present invention, after a baseband processing unit of the site to which the serving cell belongs selects the coordinating cell to participate in coordination and starts a coordinated function, steps S104 to S106 may be further included, so that the relative delay for sending data by the coordinating cell is adjusted and aligned, to ensure that data of all the coordinating cells can be sent to the baseband processing unit of the serving cell at the same time to implement synchronous data processing.

S104. If there are at least two coordinating cells, measure a relative delay for sending, by each coordinating cell, data to the serving cell.

In this embodiment of the present invention, the so-called delay is a length of time.

For a specific measurement method, reference may be made to relevant descriptions in apparatus embodiments of the present invention, which is not described herein again.

S105. Compare relative delays of data transmission of the coordinating cells to find a maximum relative delay, and calculate, based on the maximum relative delay, caching time for data sent by another coordinating cell, where the another coordinating cell refers to a cell except a coordinating cell corresponding to the maximum relative delay, and the caching time is caching time for data sent by the another coordinating cell relative to the coordinating cell corresponding to the maximum relative delay.

S106. Temporarily store, according to information about the caching time of the data, the data sent by the another coordinating cell.

The data may be released and subsequently processed after the caching time.

According to a cell management device provided in this embodiment of the present invention, a data transmission delay between a coordinating cell and a serving cell is accurately measured, a measurement result is compared with a requirement of a preset coordination manner for the data transmission delay, the coordinating cell that satisfies the delay requirement is identified, and then the coordinating cell that satisfies the delay requirement participates in coordinated communication of the cell with priority. Therefore, normal operation of a coordinated function can be ensured and an effect of coordinated communication of the cell can be improved. Further, after the coordinated communication of the cell starts, the cell management device may be used to adjust and align a relative delay for sending, by the coordinating cell, data to implement synchronous data transmission and processing and improve coordinated communication quality of the cell.

The cell management method that is provided in the embodiments of the present invention and is shown in FIG. 5 may be a method executed by the cell management device shown in the embodiments of FIG. 2 to FIG. 9; the cell management device shown in the embodiments of FIG. 2 to FIG. 9 may execute the cell management method shown in FIG. 10. For details, reference may be made to descriptions of the foregoing specific embodiments of the cell management device of FIG. 2 to FIG. 9, which are not described herein again.

In the several embodiments provided in the present application, it should be understood that the disclosed system, device, and method may be implemented in other manners without going beyond the scope of the present invention. For example, the described embodiments are merely exemplary. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts.

Moreover, schematic diagrams of the described system, device, method and different embodiments may be integrated with or used with reference to another system, module, technology, or method without going beyond the scope of the present application. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cell management device, comprising:
a delay measurement unit, configured to measure a data transmission delay between a primary site and a candidate secondary site that interworks with the primary site;
a delay storage unit, configured to store the data transmission delay obtained by the delay measurement unit by means of measurement; and
a delay management unit, configured to determine, according to the data transmission delay, one or more cells that are of the candidate secondary site and satisfy a delay requirement of a preset cell coordination manner, and select a coordinating cell from the one or more cells that satisfy the delay requirement of the preset cell coordination manner.

2. The cell management device according to claim 1, wherein
that a delay measurement unit is configured to measure a data transmission delay between a primary site and a candidate secondary site that interworks with the primary site comprises: configured to measure a round-trip delay required when a measurement message sent by the primary site is transmitted to the candidate secondary site, and is then returned to the primary site from the candidate secondary site.

3. The cell management device according to claim 2, wherein the delay measurement unit specifically comprises:
a measurement message transceiver subunit, configured to send the measurement message to the candidate secondary site, and send a first instruction message to a timing subunit to instruct the timing subunit to start timing; and configured to receive the measurement message returned by the candidate secondary site, and send a second instruction message to the timing subunit to instruct the timing subunit to stop timing; and
the timing subunit, configured to start timing after receiving the first instruction message and stop timing after receiving the second instruction message, and send the data transmission delay obtained by recording to the data transmission delay storage unit.

4. The cell management device according to claim 3, wherein the measurement message comprises a measurement sequence designed according to a length of actually transmitted data; and
the delay measurement unit is specifically configured to store a sequence source that comprises the measurement sequence.

5. The cell management device according to claim 4, wherein
the delay measurement unit is specifically configured to update the sequence source, wherein the updated sequence source comprises an updated measurement sequence.

6. The cell management device according to claims 3 to 5, wherein
the timing subunit is further configured to: if there are at least two selected coordinating cells, measure a relative delay of data transmission of the at least two selected coordinating cells; and
the cell management device further comprises a delay adjustment unit, which is configured to adjust and align the relative delay of data transmission of the coordinating cells.

7. The cell management device according to claim 6, wherein the delay adjustment unit further comprises:
a comparing subunit, configured to compare delays for sending, by coordinating cells, data to a serving cell, so as to obtain a maximum relative delay;
a caching time calculating subunit, configured to calculate, based on the maximum relative delay, caching time for data sent by another coordinating cell, wherein the another coordinating cell refers to a cell except a coordinating cell corresponding to the maximum relative delay, and the caching time is caching time for data sent by the another coordinating cell relative to the coordinating cell corresponding to the maximum relative delay; and
a data caching subunit, configured to temporarily store, according to information about the caching time of the data, the data sent by the another coordinating cell.

8. The cell management device according to claims 1 to 5, wherein
the preset cell coordination manner comprises: an uplink coordination manner, and/or a downlink coordination manner.

9. A cell management method, comprising:
measuring a data transmission delay between a primary site and a candidate secondary site that interworks with the primary site;
storing the data transmission delay obtained by means of measurement;
determining, according to the data transmission delay, one or more cells that are of the candidate secondary site and satisfy a delay requirement of a preset cell coordination manner; and
selecting a coordinating cell from the one or more cells that satisfy the delay requirement of the preset cell coordination manner.

10. The cell management method according to claim 9, wherein
the data transmission delay is a round-trip delay required when a measurement message sent by the primary site is transmitted to the candidate secondary site, and is then returned to the primary site from the candidate secondary site.

11. The method according to claim 10, wherein
the measuring a data transmission delay between a primary site and a candidate secondary site comprises:
sending the measurement message to the candidate secondary site, and receiving the measurement message returned by the candidate secondary site; starting timing after the measurement message is sent, and stopping timing after the measurement message returned by the candidate secondary site is received, and recording the obtained data transmission delay.

12. The method according to claim 11, wherein
the measurement message comprises a measurement sequence designed according to a length of actually transmitted data; and
a sequence source that comprises the measurement sequence is stored.

13. The method according to claim 12, comprising:
updating the sequence source, wherein the updated sequence source comprises an updated measurement sequence.

14. The method according to claims 11 to 13, wherein after the selecting a coordinating cell from the one or more cells that satisfy the delay requirement of the preset cell coordination manner, the method further comprises:
if there are at least two selected coordinating cells, measuring a relative delay of data transmission of the at least two selected coordinating cells; and
adjusting and aligning the relative delay.

15. The method according to claim 14, wherein
the adjusting and aligning the relative delay comprises:
comparing delays for sending, by coordinating cells, data to a serving cell, so as to obtain a maximum relative delay;
calculating, based on the maximum relative delay, caching time for data sent by another coordinating cell, wherein the another coordinating cell refers to a cell except a coordinating cell corresponding to the maximum relative delay, and the caching time is caching time for data sent by the another coordinating cell relative to the coordinating cell corresponding to the maximum relative delay; and
temporarily storing, according to information about the caching time of the data, the data sent by the another coordinating cell.

16. The method according to claims 10 to 13, wherein
the preset cell coordination manner comprises: an uplink coordination manner, and/or a downlink coordination manner.
